# FASCICULE DE BREVET EUROPEEN

(11) **EP 1 543 997 B1**
(45) Date de publication et mention de la délivrance du brevet: **26.03.2008**
(21) Numéro de dépôt: 04292766.5
(22) Date de dépôt: 24.11.2004
(51) Int. Cl.: B60B 21/02

(54) **Jante améliorée et roue comportant une telle jante**
Optimierte Felge und Rad mit solcher Felge
Optimized rim and wheel having such rim

(30) Priorité: 17.12.2003 FR 0314830
(43) Date de publication de la demande: 22.06.2005
(73) Titulaire: MEFRO ROUES FRANCE, 10600 La Chapelle St. Luc (FR)
(72) Inventeur: Couturier, Philippe, 63115 Mezel (FR)
(74) Mandataire: Laget, Jean-Loup

(56) Documents cités:
- EP-A- 0 573 162
- EP-A- 0 799 721
- WO-A-00/26039
- DE-A- 4 006 374
- FR-A- 2 808 479

## Description

La présente invention est relative à une jante pour une roue de véhicule automobile. Plus particulièrement, l'invention se rapporte à une jante permettant le montage et l'utilisation d'un pneumatique sans chambre. Plus particulièrement encore, l'invention se rapporte à une jante en une seule pièce en tôle. Il est à noter que l'invention ne s'applique pas au domaine des jantes en alliage léger obtenues par moulage et/ou forgeage. Une telle jante selon le préambule de la revendication 1 est connue du document FR 2 808 479 A.

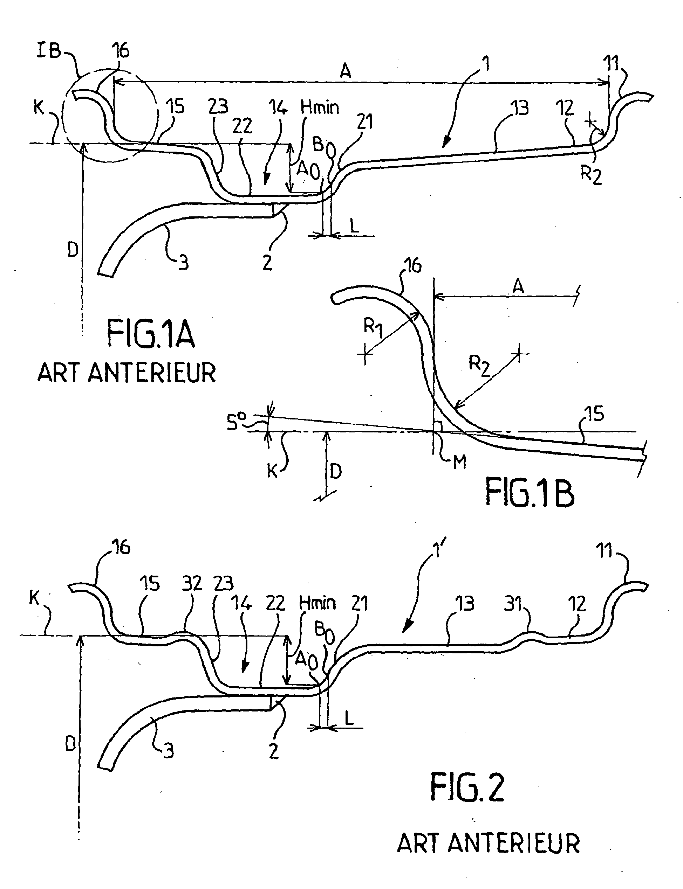

Une roue est essentiellement constituée d'une jante et d'un voile, également appelé disque, pouvant être fixé directement ou indirectement à un moyeu. La jante possède une forme de révolution autour d'un axe principal correspondant à l'axe de la roue. La figure 1A des dessins placés en annexe représente partiellement la section axiale, ou section méridienne, d'une roue selon l'art antérieur. Sur la figure 1A la jante 1 et une portion du voile de roue 3 sont représentées. La droite K est parallèle à l'axe principal de la roue et est située à une distance D de celui-ci. Dans ce qui suit, la partie droite d'une figure correspond au côté de la roue, ou de la jante, destiné à être positionné du côté de la caisse du véhicule automobile et sera qualifiée de côté intérieur. La partie gauche d'une figure correspond au côté de la roue, ou de la jante, destiné à être positionné à l'écart de la caisse du véhicule et sera qualifiée de côté extérieur. La droite K peut donc être orientée du côté intérieur vers le côté extérieur.

En se déplaçant le long de la droite K du côté intérieur vers le côté extérieur, la face radialement extérieure de la jante, ou profil de la jante, comporte une partie formant crochet intérieur 11, une partie formant siège intérieur 12, une partie de liaison 13, une partie en forme de gorge 14, une partie formant siège extérieur 15 et une partie formant crochet extérieur 16.

La jante 1 possède un diamètre D et une largeur A, tels que définis par la norme ETRTO. Plus précisément en se référant à la figure 1B, une droite tangente à la partie formant siège extérieure 15 coupe en un point M une droite verticale tangente au cercle de rayon R₂ raccordant la partie de siège extérieur 15 et la partie de crochet extérieur 16. La droite K est alors définie comme la droite parallèle à l'axe principal de le roue, généralement horizontale, passant par le point M. Le diamètre D de la jante est égal à deux fois la distance entre l'axe principal de la roue et la droite K. Il est à noter que la droite tangente à la partie de siège extérieure 15 fait un léger angle de 5° avec la droite K. Par ailleurs, la largeur A de la jante est définie comme la distance entre une première droite verticale tangente au cercle de rayon R₂ raccordant la partie de siège extérieur 15 et la partie de crochet extérieur 16 et une deuxième droite verticale tangente au cercle de rayon R₂ raccordant la partie de siège intérieur 12 et la partie de crochet intérieur 11.

La partie de gorge 14 comporte un flanc intérieur 21, un fond 22 et un flanc extérieur 23. Le fond 22 est en dépression par rapport à la partie formant siège extérieur 15 d'une profondeur au moins égale à une profondeur minimale prédéfinie Hₘᵢₙ. Le fond 22 possède donc un diamètre maximum donné par la formule D-2Hₘᵢₙ. La partie en forme de gorge 14 a pour fonction de permettre le montage d'un pneumatique sans chambre d'une manière par ailleurs connue.

Le fond 22 de la partie en forme de gorge 14 est soudé au voile 3. Plus précisément, le voile 3 en tôle présente une partie périphérique globalement cylindrique d'axe l'axe principal. La face radialement intérieure du fond 22 est soudée à la partie périphérique du voile, ou bord, par un ou plusieurs cordons de soudure 2 : soit la soudure est réalisée par un unique cordon de soudure continu, soit la soudure est réalisée par une pluralité de cordons de soudure 2. Dans ce dernier cas, par exemple, les cordons de soudure 2 sont répartis annulairement de manière régulière tous les 90°, et s'étendent respectivement sur un arc d'ouverture au sommet de 30°. Par rapport à une soudure continue, comportant un unique cordon, la soudure discontinue, comportant une pluralité de cordons, présente l'avantage d'économiser le matériau nécessaire à la réalisation de la soudure et de réduire la durée de soudage, en particulier si l'on réalise simultanément les différents cordons à l'aide de torches de soudage distinctes. Elle est surtout plus simple à réaliser lorsque le bord du disque à souder présente une géométrie irrégulière liée à son procédé de réalisation (emboutissage).

Pourtant, dans le cas d'une soudure discontinue, il s'est avéré à l'usage que, dans des conditions de charge très élevées, des fissures peuvent apparaître dans la jante, au niveau des extrémités circonférentielles de chacun des cordons de soudure. Ces fissures ont tendance à se former et à se propager le long de la direction axiale ou méridienne de la jante de roue. La présence de ces fissures entraîne la fuite de l'air servant à mettre sous pression le pneumatique sans chambre. En conséquence, le pneumatique se dégonfle bien qu'il ne soit pas lui-même percé ou endommagé. Après avoir identifié l'origine de la fuite, il est nécessaire de changer au moins la roue concernée et éventuellement le pneumatique associé.

La figure 2 des dessins placés en annexe représente une autre jante l' selon l'art antérieur. Le profil de cette autre jante est essentiellement identique à celui de la jante 1 représenté sur la figure 1, mais possède en plus une partie formant bossage anti-décoincement intérieur 31 reliant la partie formant siège intérieur 12 et la partie de liaison 13, et une partie formant bossage anti-décoincement extérieur reliant le flanc extérieur 23 de la partie en forme de gorge 14 et la partie formant siège extérieur 15. La présence des parties formant bossage intérieur et extérieur 31, 32 permettent aux parties formant siège extérieur et intérieur de définir des cuvettes dans lesquelles les talons intérieur et extérieur du pneumatique sont respectivement positionnés à force par franchissement des parties formant bossage.

La norme ETRTO définit des profils de jante standards en donnant un certain nombre de cotes : diamètre de la jante D, largeur A, profondeur minimale de la partie en forme de gorge Hₘᵢₙ (par exemple de valeur 15 mm ou 17,3 mm d'après la norme), pente des parties formant siège etc. En revanche, à l'heure actuelle, la forme du flanc intérieur de la partie en forme de gorge ne fait pas partie de cette norme et est laissée au choix du constructeur de la jante. Ce dernier doit tenir compte de l'encombrement des éléments qui doivent être positionnés radialement à l'intérieur de la jante, tels que les éléments du système de freinage comme le disque de frein et l'étrier de frein.

L'invention a donc pour but de proposer une jante améliorée permettant la soudure discontinue au moyen d'une pluralité de cordons de soudure mais moins sujette à l'apparition de fissures.

L'invention a pour objet une jante en tôle pour roue de véhicule automobile, ayant une forme de révolution autour d'un axe principal correspondant à l'axe de rotation de la roue, la jante ayant, dans un plan méridien, un profil radialement extérieur à la jante comportant, depuis un côté intérieur de la jante destiné à être placé côté caisse du véhicule vers un côté extérieur de la jante destiné à être placé à l'écart de la caisse du véhicule, une partie formant crochet intérieur, une partie formant siège intérieur, une partie de liaison, une partie en forme de gorge, une partie formant siège extérieur, et une partie formant crochet extérieur, la partie en forme de gorge comportant un flanc intérieur relié à ladite partie de liaison, un fond et un flanc extérieur, la jante ayant un diamètre D et une largeur A prédéfinis et la partie en forme de gorge ayant, par rapport audit diamètre, une profondeur au moins égale à une profondeur minimale Hₘᵢₙ prédéfinie, caractérisée en ce que, en considérant qu'une courbure du profil du flanc intérieur est strictement positive en un point lorsque le centre de courbure en ce point est disposé à une distance finie radialement vers l'extérieur dudit flanc intérieur, ledit flanc intérieur comporte un premier point et un deuxième point, le premier point étant adjacent au fond de la partie en forme de gorge et étant situé sur un cercle de diamètre D-2Hₘᵢₙ, le deuxième point étant le dernier point du flanc intérieur de courbure strictement positive, étant espacé du premier point à la fois radialement vers l'extérieur et axialement en direction de la partie de liaison, et étant distant du premier point, en projection sur l'axe principal, d'une longueur supérieure à une longueur prédéterminée indépendante du diamètre D et de la largeur A de la jante et valant 15 mm.

Dans un mode de réalisation préférentiel, le flanc intérieur comprend, s'étendant entre le premier point et le deuxième point, un unique segment de courbe ayant une courbure strictement positive en tous points.

Dans d'autres modes de réalisation, entre le premier point et le deuxième point, le flanc intérieur comprend une pluralité de segments de courbe ayant une courbure strictement positive en tous points.

De préférence, au moins deux des segments de la pluralité de segments de courbe ayant une courbure strictement positive en tous points sont reliés entre eux par au moins un segment de courbe intermédiaire.

Dans un mode de réalisation, ledit au moins un segment de courbe intermédiaire est un segment de courbe intermédiaire rectiligne ayant en tous points une courbure nulle.

Dans un autre mode de réalisation, ledit au moins un segment de courbe intermédiaire est un segment de courbe intermédiaire ayant une courbure strictement négative en tous points.

De préférence, le rayon de courbure en tout point dudit au moins un segment de courbe ayant une courbure strictement positive en tous points est supérieur à un rayon de courbure prédéfini R₀.

De préférence encore, le rayon de courbure prédéfini vaut 20 mm.

De préférence, le profil comporte une partie formant bossage anti-décoincement intérieur entre ladite partie formant siège intérieur et ladite partie de liaison, et une partie formant bossage anti-décoincement extérieur entre ladite partie formant siège extérieur et ledit flanc extérieur de ladite partie en forme de gorge, les parties formant bossage intérieur et extérieur ayant respectivement un diamètre strictement supérieur au diamètre desdites parties formant siège intérieur et extérieur.

L'invention a également pour objet une roue pour véhicule automobile comportant un voile et une jante en tôle, ledit voile étant soudé par une pluralité de cordons de soudure à une face radialement intérieure d'une partie en forme de gorge de la jante, caractérisée en ce que la jante est une jante selon ce qui a été décrit ci-dessus.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1A représente une section axiale partielle d'une roue comportant une jante selon l'art antérieur soudée à un voile de roue ;
- la figure 1B est une vue agrandie de la zone entourée 1 B de la figure 1A et permet de définir le diamètre D de la jante selon la norme ETRTO ;
- la figure 2 représente une section axiale partielle d'une roue comportant une jante selon l'art antérieur ayant des bossages anti-décoincement ;
- la figure 3 représente une section axiale partielle d'une roue comportant une jante selon un premier mode de réalisation de l'invention ;
- la figure 4 représente une section axiale partielle d'une roue comportant une jante selon un deuxième mode de réalisation ;
- la figure 5 représente une section axiale partielle d'une roue comportant une jante selon un troisième mode de réalisation ; et,
- la figure 6 représente une section axiale partielle d'une roue comportant une jante selon un quatrième mode de réalisation.

D'une figure à l'autre, les éléments identiques portent les mêmes chiffres de référence. Un élément d'une figure similaire à un élément d'une figure précédente porte le même chiffre de référence augmenté d'une centaine.

La demanderesse a réalisé des simulations numériques ainsi que des essais permettant de définir une jante ayant un profil particulier pour laquelle les contraintes mécaniques générées aux extrémités circonférentielles des cordons de soudure sont correctement réparties et dissipées.

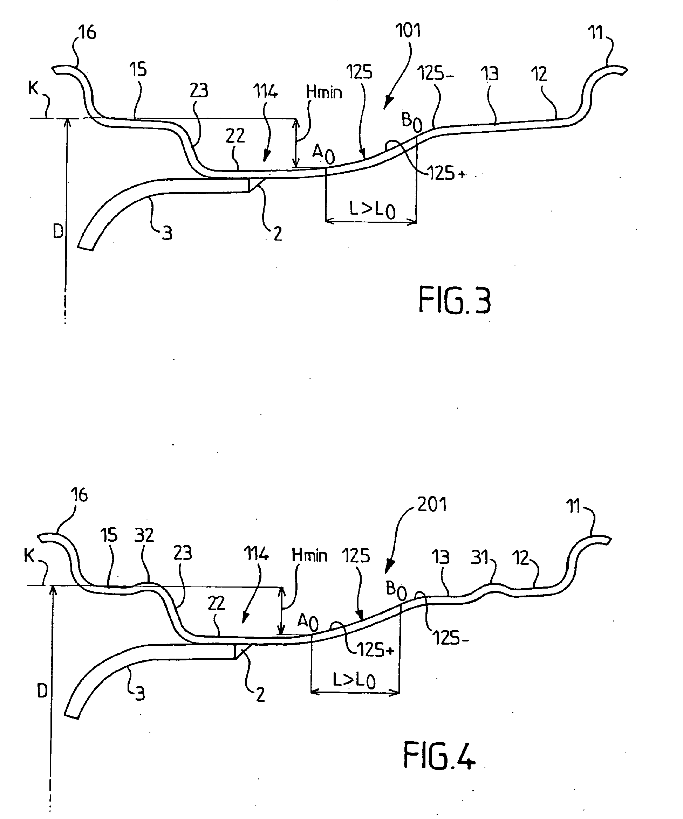

Le premier mode de réalisation de la jante selon l'invention va être décrit en détail en référence à la figure 3. La partie de gorge 114 de la jante 101 comporte un flanc intérieur 125 reliant le fond 22 de la partie en forme de gorge 114 et la partie de liaison 13. En prenant en considération la face radialement extérieure de la jante de roue, ou profil de la jante, le flanc intérieur 125 comporte un segment de courbe de courbure strictement positive 125+, s'étendant entre un premier point A₀ et un deuxième point B₀, et un segment de courbe de courbure négative 125-, s'étendant du deuxième point B₀ vers la partie de liaison 13.

La convention sur le signe de la courbure est la suivante. Lorsque l'on se déplace le long du profil de la jante, du côté intérieur vers le côté extérieur ou du côté extérieur vers le côté intérieur, et que le centre de courbure du profil en un point est situé radialement à l'extérieur de la jante de roue, la courbure sera dite positive. Inversement, lorsque le centre de courbure est situé radialement à l'intérieur de la jante, la courbure sera dite négative. De manière équivalente, un segment de courbe de courbure positive est un segment de courbe ayant une concavité orientée radialement vers l'extérieur de la jante. Un segment de courbe de courbure négative est un segment de courbe ayant une convexité orientée radialement vers l'extérieur de la jante. La courbure étant égale à l'inverse du rayon de courbure, elle sera nulle dans le cas d'un segment de courbe rectiligne.

Par ailleurs, dans ce document, un segment de courbe est implicitement défini comme une portion de courbe pour laquelle la courbure est une fonction variant continûment. En un point où la courbure est discontinue, le profil comporte un angle vif. Un segment de courbe est donc limité par deux points. Pour chacun de ces points soit la courbure subit une discontinuité soit la courbure s'annule ou change de signe.

Le segment de courbure strictement positive 125+ s'étend entre le point A₀ et le point B₀. Le premier point A₀ est défini comme le point du flanc intérieur 125 qui est adjacent au fond 22 et qui est positionné radialement sur un cercle de diamètre D-2Hₘᵢₙ. Le deuxième point B₀ est défini comme le dernier point du flanc intérieur 125, lorsque l'on se déplace de A₀ vers B₀, ayant une courbure strictement positive. Dans le premier mode de réalisation présenté, le segment de courbe de courbure strictement positive 125+ est unique entre les points A₀ et B₀ et s'étend du point A₀ au point B₀.

La projection sur l'axe principal, ou sur la droite K, du segment de courbe de courbure strictement positive 125+ possède une longueur L. Pour caractériser le profil de la jante selon l'invention, il est nécessaire de contraindre la valeur de la longueur L. La longueur L est supérieure à une longueur prédéterminée L₀. La longueur prédéterminée est identique quel que soit le diamètre D et la largeur A de la jante considérée et vaut 15 mm.

De plus, le segment de courbe de courbure positive 125+ présente une évolution douce. Plus précisément, le rayon de courbure en un point quelconque appartenant au segment de courbe de courbure positive 125+ est supérieur à un rayon de courbure prédéfinie R₀. Le rayon de courbure prédéfini R₀ vaut de préférence 20 mm.

La forme particulière du segment de courbe 125+ ayant une concavité orientée radialement vers l'extérieur de la jante permet de mieux répartir et dissiper les contraintes qui apparaissent dans la paroi du fond 22 aux extrémités circonférentielles des cordons de soudure 2. En conséquence, une jante ayant le profil représenté sur la figure 3, qui respecte la norme ETRTO, possédera une durée de vie accrue par rapport aux jantes de l'art antérieur.

Sur la figure 4, un deuxième mode de réalisation est représenté. La jante 201 de ce deuxième mode de réalisation est essentiellement identique à celle du premier mode de réalisation représenté à la figure 3, en particulier en ce qui concerne la partie en forme de gorge qui est donc repérée au moyen du même chiffre de référence 114. Ce deuxième mode de réalisation ne diffère du précédent que par la présence d'une partie formant bossage anti-décoincement intérieur 31 et d'une partie formant bossage anti-décoincement extérieur 32 identiques à celles qui ont été décrites dans la partie introductive de ce document en référence à la figure 2.

Il est bien entendu qu'une variante ne comportant qu'un seul des deux bossages anti-décoincement fait également partie du cadre de l'invention.

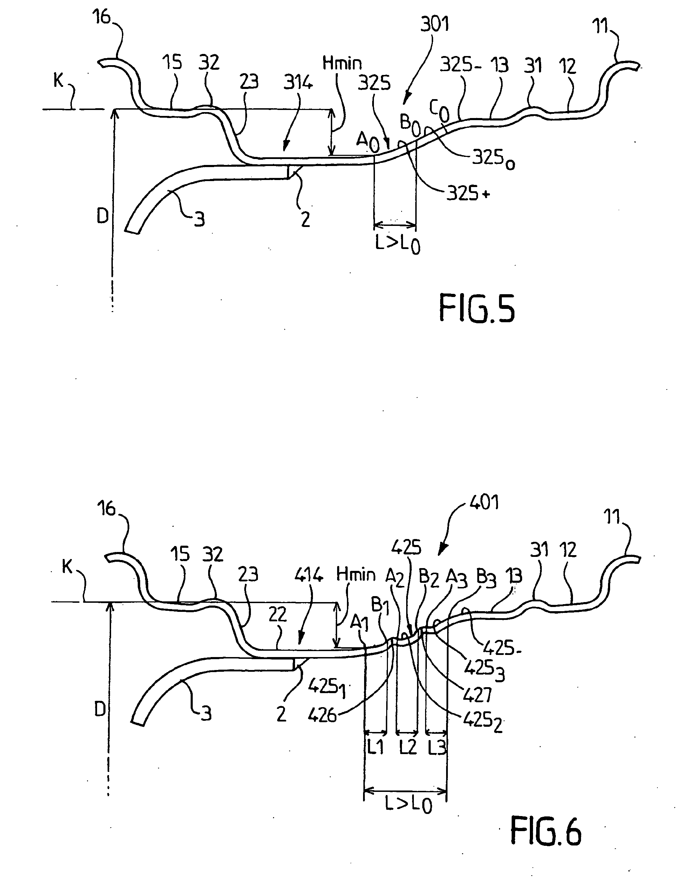

La figure 5 présente un troisième mode de réalisation de la jante selon l'invention. La jante 301 de ce mode de réalisation est proche de la jante selon le deuxième mode de réalisation de la figure 4 en ce qu'elle présente des parties formant bossage anti-décoincement. Dans ce troisième mode de réalisation, le flanc intérieur 325 de la partie en forme de gorge 314 comporte un unique segment de courbe 325+ ayant une concavité orientée radialement vers l'extérieur de la jante entre le premier point A₀ et le deuxième point B0, un segment de courbe rectiligne 325₀ de courbure nulle entre le deuxième point B₀ et un troisième point C₀, et un segment de courbe 325- ayant une convexité orientée radialement vers l'extérieur de la jante du point C₀ jusqu'à la partie formant liaison 13. Le troisième point C₀ peut être défini comme le point du flanc intérieur 325 qui, lorsque l'on se déplace du premier point A₀ vers la partie de liaison 13, est le premier point présentant une courbure strictement négative. Dans ce troisième mode de réalisation, le segment de courbe de courbure strictement positive 325+ est unique entre les points A₀ et B₀ et s'étend de A₀ à B₀.

Enfin, à la figure 6, un quatrième mode de réalisation est présenté dans lequel, entre un premier point A₁ et un deuxième point B₃, le flanc intérieur 425 de la jante 401 présente une pluralité de segments de courbe de courbure strictement positive. Dans le profil représenté à la figure 6, les segments de courbe de courbure strictement positive sont reliés les uns aux autres par des segments de courbe intermédiaires qui sont dans ce mode de réalisation particulier des segments de courbe intermédiaires de courbure strictement négative formant des bossages. Plus particulièrement, un premier segment de courbe de courbure strictement positive 425₁ s'étend du premier point A₁ au point B₁, un premier bossage 426, formant un segment de courbe intermédiaire de courbure strictement négative, s'étend entre le point B₁ et le point A₂, un deuxième segment de courbe de courbure strictement positive 425₂ s'étend du point A₂ au point B₂, un deuxième bossage 427, formant un deuxième segment de courbe intermédiaire de courbure strictement négative, s'étend entre le point B₂ et le point A₃ et un troisième segment de courbure strictement positive 425₃ s'étend entre le point A₃ et le deuxième point B₃.

Le premier point A₁ peut être défini, à l'image du premier point A₀ de la figure 3, comme le point du flanc intérieur 425 qui est adjacent au fond 22 et qui est positionné radialement sur un cercle de diamètre D-2Hₘᵢₙ. Le deuxième point B₃ peut être défini, à l'image du deuxième point B₀ de la figure 3, comme le dernier point du flanc intérieur 425 possédant une courbure strictement positive. Les points intermédiaires B₁, A₂, B₂ et A₃, sont ici des points de discontinuité de la courbure.

La condition géométrique qui a été identifiée afin qu'aucune fissure n'apparaisse dans la paroi du fond 22 de la partie en forme de gorge 414 se traduit ici, comme précédemment, par une condition sur la longueur L entre les projections respectives sur l'axe principal du premier point A₁ et du deuxième point B₃. La longueur L doit être supérieure à la longueur prédéterminée L₀ de 15 mm.

Dans ce quatrième mode de réalisation, le nombre et le type des segments de courbe intermédiaires (deux dans le cas de la figure 6) n'est pas limitatif. Ces segments de courbe intermédiaires peuvent être des segments de courbe rectilignes dont la courbure en tous points est nulle. De même, la pluralité de segments de courbe intermédiaires peut être constituée de segments de courbe rectiligne et de segments de courbe à courbure strictement négative. On notera que les points intermédiaires sont définis par des points pour lesquels soit la courbure subit une discontinuité soit la courbure s'annule ou change de signe.

Dans ce quatrième mode de réalisation, la condition supplémentaire sur les rayons de courbure peut être appliquée respectivement aux différents segments de la pluralité de segments de courbe de courbure positive de manière à ce que ces derniers présentent des variations lentes : la valeur du rayon de courbure en tous points du profil appartenant à l'un des segments de courbe de courbure positive est supérieure à un rayon de courbure prédéfini R₀ valant de préférence 20 mm.

La jante selon l'invention peut être soudée à un voile de roue par une soudure discontinue réalisée au moyen d'une pluralité de cordons de soudure. La roue obtenue possède une durée de vie plus longue que la durée de vie des roues selon l'art antérieur. Le profil de la jante selon l'invention est facile à obtenir par exemple par un procédé de roulage d'une tôle en acier ou en aluminium. Il suffit pour cela de modifier la forme des outillages servant à cette opération pour qu'elles engendrent le profil de la jante selon l'invention.

## Revendications

1. Jante (101, 201, 301, 401) en tôle pour roue de véhicule automobile, ayant une forme de révolution autour d'un axe principal correspondant à l'axe de rotation de la roue, ladite jante ayant, dans un plan méridien, un profil radialement extérieur à la jante comportant, depuis un côté intérieur de la jante destiné à être placé côté caisse du véhicule vers un côté extérieur de la jante destiné à être placé à l'écart de la caisse du véhicule, une partie formant crochet intérieur (11), une partie formant siège intérieur (12), une partie de liaison (13), une partie en forme de gorge (114, 314, 414), une partie formant siège extérieur (15), et une partie formant crochet extérieur (16), ladite partie en forme de gorge comportant un flanc intérieur (125, 325, 425) relié à ladite partie de liaison, un fond (22) et un flanc extérieur (23), ladite jante ayant un diamètre D et une largeur A prédéfinis et la partie en forme de gorge ayant, par rapport audit diamètre, une profondeur au moins égale à une profondeur minimale Hₘᵢₙ prédéfinie, **caractérisée en ce que**, en considérant qu'une courbure du profil du flanc intérieur est strictement positive en un point lorsque le centre de courbure en ce point est disposé à une distance finie radialement vers l'extérieur dudit flanc intérieur, ledit flanc intérieur comporte un premier point (A₀, A₁) et un deuxième point (B₀, B₃), ledit premier point étant adjacent audit fond de la partie en forme de gorge et étant situé sur un cercle de diamètre D-2Hₘᵢₙ, ledit deuxième point étant le dernier point dudit flanc intérieur de courbure strictement positive, étant espacé dudit premier point à la fois radialement vers l'extérieur et axialement en direction de ladite partie de liaison, et étant distant dudit premier point, en projection sur ledit axe principal, d'une longueur (L) supérieure à une longueur prédéterminée (L₀) indépendante du diamètre D et de la largeur A de la jante et valant 15 mm.

2. Jante selon la revendication 1, **caractérisé en ce que** ledit flanc intérieur comprend, s'étendant entre ledit premier point (A₀) et ledit deuxième point (B₀), un unique segment de courbe ayant une courbure strictement positive en tous points (125+, 125+, 325+).

3. Jante selon la revendication 1, **caractérisée en ce que**, entre ledit premier point (A₁) et ledit deuxième point (B₃), ledit flanc intérieur comprend une pluralité de segments de courbe ayant une courbure strictement positive en tous points (425₁, 425₂, 425₃).

4. Jante selon la revendication 3, **caractérisée en ce qu'**au moins deux desdits segments (425₁, 425₂, 425₃) de ladite pluralité de segments de courbe ayant une courbure strictement positive en tous points sont reliés entre eux par au moins un segment de courbe intermédiaire (426, 427).

5. Jante selon la revendication 4, **caractérisée en ce que** ledit au moins un segment de courbe intermédiaire est un segment de courbe intermédiaire rectiligne ayant en tous points une courbure nulle.

6. Jante selon la revendication 4, **caractérisée en ce que** ledit au moins un segment de courbe intermédiaire est un segment de courbe intermédiaire ayant une courbure strictement négative en tous points (426, 427).

7. Jante selon l'une des revendications 1 à 6, **caractérisée en ce que** le rayon de courbure en tout point dudit au moins un segment de courbe ayant une courbure strictement positive en tous points est supérieur à un rayon de courbure prédéfini (R₀).

8. Jante selon la revendication 7, **caractérisé en ce que** ledit rayon de courbure prédéfini (R₀) vaut 20 mm.

9. Jante selon l'une quelconque des revendications 1 à 8, **caractérisée en ce que** ledit profil comporte une partie formant bossage anti-décoincement intérieur (31) entre ladite partie formant siège intérieur (12) et ladite partie de liaison (13), et une partie formant bossage anti-décoincement extérieur (32) entre ladite partie formant siège extérieur (14) et ledit flanc extérieur (23) de ladite partie en forme de gorge (14), les parties formant bossage intérieur et extérieur ayant respectivement un diamètre strictement supérieur au diamètre desdites parties formant siège intérieur et extérieur.

10. Roue pour véhicule automobile comportant un voile (3) et une jante (1) en tôle, ledit voile étant soudé par une pluralité de cordons de soudure (2) à une face radialement intérieure (22) d'une partie en forme de gorge (114, 314, 414) de ladite jante (101, 201, 301, 401), **caractérisée en ce que** ladite jante est une jante selon l'une des revendications 1 à 9.

## Claims

1. Rim (101, 201, 301, 401) of sheet metal for an automobile vehicle wheel, having a form of revolution about a main axis corresponding to the rotation axis of the wheel, which rim in a central plane has a profile radially placed outside the rim and including from an inner side of the rim, designed to be placed towards the body of the vehicle and towards the outside of the rim, designed to be placed away from the vehicle body, a part forming an internal hook (11), part forming an internal seat (12), an interconnecting part (13), a part forming a groove (114, 314, 414), a part forming an outer seat (15), and a part forming an outer hook (16), said part forming a groove having an inner flange (125, 325, 425) connected to said interconnecting part, a bottom (22) and an outer side (23), said rim having a diameter D and a width A that are predefined and the part forming a groove having, with respect to said diameter, a depth of at least a minimum predefined height Hₘᵢₙ, **characterized in that**, if it is considered that a curve on the inner side profile is strictly positive at a given point when the curve centre of this point is arranged at a finite radial distance with respect to the outside of said inner side, said inner side has a first point (A₀, A₁) and a second point (B₀, B₃), said first point being adjacent to said bottom of the part forming a groove and situated on a circle having a diameter D-2Hₘᵢₙ, said second point being the last point of said inner side of the strictly positive curve, being spaced from said first point both radially towards the outside and axially towards said interconnecting part, and being at a distance from said first point, by projection along said main axis, by a length (L) greater than a predetermined length (L₀) independent of diameter D and of width A of the rim and equal to 15 mm.

2. Rim according to claim 1 **characterized in that** said inner side includes, extending between said first point (A₀) and said second point (B₀) a single curve segment having a strictly positive curve at all points (125+, 125+, 325+).

3. Rim according to claim 1, **characterized in that** between said first point (A₁) and said second point (B₃), said inner side comprising a multitude of curved segments having a strictly positive curve at all points (425₁, 425₂, 425₃).

4. Rim according to claim 3, **characterized in that** at least two of the segments (425₁, 425₂, 425₃) of said multitude of curved segments have a strictly positive curve at all points are connected together by at least one intermediate curved segment (426, 427).

5. Rim according to claim 4, **characterized in that** said at least one intermediate curve segment is an straight intermediate curved segment having a zero curve at all points.

6. Rim according to claim 4 **characterized in that** said at least one intermediate curve segment is an intermediate curved segment having a strictly negative curve at all points (426, 427).

7. Rim according to one of claims 1 to 6, **characterized in that** the curve radius at any point of said at least one curved segment having a strictly positive curve at all points is greater than a predefined curve radius (R₀).

8. Rim according to claim 7, **characterized in that** said predefined curve radius (R₀) is equal to 20 mm.

9. Rim according to any one of claims 1 to 8, **characterized in that** said profile includes a part forming an interior anti-non-releasing boss (31) between said part forming the internal seat (12) and said interconnecting part (13) and a part forming an outer anti-non-releasing boss (32) between said part forming an outer seat (14) and said outer side (23) of the part forming a groove (14) and the part forming an internal and external boss having respectively a diameter strictly greater than the diameter of said parts forming the internal and external seat.

10. Wheel for an automobile vehicle including a disk (3) and rim (1) of sheet metal, said disc being welded by a multitude of welded cords (2) to the radially inner face (22) of a part forming a groove (114, 314, 414) of said rim (101, 201, 301, 401), **characterized in that** said rim is a rim according to one of claims 1 to 9.

## Patentansprüche

1. Felge (101, 201, 301, 401) aus Blech für ein Rad eines Kraftfahrzeugs, welche die Form eines Drehkörpers um eine Hauptachse aufweist, die der Drehachse des Rades entspricht, wobei die Felge in einer Meridianebene ein radial außen an der Felge befindliches Profil aufweist, das, ausgehend von einer Innenseite der Felge, die an den Fahrzeugkasten des Fahrzeugs angrenzend angeordnet wird, zu einer Außenseite der Felge hin, die vom Fahrzeugkasten beabstandet angeordnet wird, einen Abschnitt (11), der einen inneren Haken bildet, einen Abschnitt (12), der einen inneren Sitz bildet, einen Verbindungsabschnitt (13), einen kehlförmigen Abschnitt (114, 314, 414), einen Abschnitt (15), der einen äußeren Sitz bildet, und einen Abschnitt (16), der einen äußeren Haken bildet, aufweist, wobei der kehlförmige Abschnitt eine mit den Verbindungsabschnitt verbundene Innenflanke (125, 325, 425), einen Boden (22) und eine Außenflanke (23) aufweist, wobei die Felge einen vorgegebenen Durchmesser D und eine vorgegebene Breite A aufweist und der kehlförmige Abschnitt bezüglich des Durchmessers eine Tiefe besitzt, die wenigstens gleich einer vorgegebenen Minimaltiefe Hₘᵢₙ ist, **dadurch gekennzeichnet, dass** unter Berücksichtigung, dass eine Krümmung des Profils der Innenflanke streng positiv in einem Punkt ist, wenn das Krümmungszentrum in diesem Punkt in einem endlichen Abstand radial außerhalb der Innenflanke angeordnet ist, die Innenflanke einen ersten Punkt (A₀, A₁) und einen zweiten Punkt (B₀, B₃) aufweist, wobei der erste Punkt an den Boden des kehlförmigen Abschnitts angrenzt und sich auf einem Kreis mit Durchmesser D-2Hₘᵢₙ befindet, wobei der zweite Punkt, welcher der letzte Punkt der Innenflanke mit streng positiver Krümmung ist, von dem ersten Punkt sowohl radial nach außen als auch axial in Richtung des Verbindungsabschnitts beabstandet ist, und der in einer Projektion auf die Hauptachse von dem ersten Punkt um eine Länge (L) beabstandet ist, die größer als eine vorgegebene Länge (L₀) ist, die unabhängig von dem Durchmesser D und der Breite A der Felge ist und die 15 mm beträgt.

2. Felge gemäß Anspruch 1, **dadurch gekennzeichnet, dass** die Innenflanke zwischen dem ersten Punkt (A₀) und dem zweiten Punkt (B₀) ein einziges Kurvensegment (125+, 125+, 325+) umfasst, das in allen Punkten eine streng positive Krümmung aufweist.

3. Felge gemäß Anspruch 1, **dadurch gekennzeichnet, dass** zwischen dem ersten Punkt (A₁) und dem zweiten Punkt (B₃) die Innenflanke zahlreiche Kurvensegmente (425₁, 425₂, 425₃) aufweist, die in allen Punkten eine streng positive Krümmung aufweisen.

4. Felge gemäß Anspruch 3, **dadurch gekennzeichnet, dass** wenigstens zwei der Segmente (425₁, 425₂, 425₃) der zahlreichen Kurvensegmente, die in allen Punkten eine streng positive Krümmung aufweisen, untereinander über ein Zwischenkurvensegment (426, 427) verbunden sind.

5. Felge gemäß Anspruch 4, **dadurch gekennzeichnet, dass** wenigstens ein Zwischenkurvensegment ein geradliniges Zwischenkurvensegment ist, das in allen Punkten eine verschwindende Krümmung aufweist.

6. Felge gemäß Anspruch 4, **dadurch gekennzeichnet, dass** wenigstens eines der Zwischenkurvensegmente ein Zwischenkurvensegment (426, 427) ist, das in allen Punkten eine streng negative Krümmung aufweist.

7. Feige gemäß einem der Ansprüche 1 bis 6, **dadurch gekennzeichnet, dass** der Krümmungsradius in allen Punkten des wenigstens einen Kurvensegments, das in allen Punkten eine streng positive Krümmung aufweist, größer als ein vorgegebener Krümmungsradius (R₀) ist.

8. Felge gemäß Anspruch 7, **dadurch gekennzeichnet, dass** der vorgegebene Krümmungsradius (R₀) 20 mm beträgt.

9. Felge gemäß einem der Ansprüche 1 bis 8, **dadurch gekennzeichnet, dass** das Profil zwischen dem einen inneren Sitz bildenden Abschnitt (12) und dem Verbindungsabschnitt (13) einen Abschnitt (31), der einen das Abdrücken verhindernden inneren Buckel bildet, und zwischen dem einen äußeren Sitz bildenden Abschnitt (14) und der Innenflanke (23) des kehlförmigen Abschnitts (14) einen Abschnitt (32), der einen das Abdrücken verhindernden äußeren Buckel bildet, ausweist, wobei die die inneren und äußeren Buckel bildenden Abschnitte jeweils einen Durchmesser aufweisen, der streng größer als der Durchmesser der den inneren und äußeren Sitz bildenden Abschnitte ist.

10. Rad für ein Kraftfahrzeug, das eine Radschüssel (3) und eine Felge (1) aus Blech aufweist, wobei die Radschüssel durch eine Vielzahl von Schweißnähten (2) mit einer radial innenliegenden Fläche (22) eines kehlförmigen Abschnitts (114, 314, 414) der Felge (101, 201, 301, 401) verbunden ist, **dadurch gekennzeichnet, dass** die Felge eine Felge gemäß einem der Ansprüche 1 bis 9 ist.
